# EUROPÄISCHE PATENTSCHRIFT

(11) **EP 1 248 947 B1**
(45) Veröffentlichungstag und Bekanntmachung des Hinweises auf die Patenterteilung: **20.04.2005**
(21) Anmeldenummer: 00969492.8
(22) Anmeldetag: 11.10.2000
(51) Int. Cl.: G01N 15/00, G01N 21/45, G01N 21/21, G01N 21/41, G01N 21/64

(54) **VERFAHREN UND VORRICHTUNG ZUR CHARAKTERISIERUNG EINER KULTURFLÜSSIGKEIT**
METHOD AND DEVICE FOR CHARACTERIZING A CULTURE LIQUID
PROCEDE ET DISPOSITIF POUR CARACTERISER UN LIQUIDE DE CULTURE

(30) Priorität: 11.10.1999 DE 19949029
(43) Veröffentlichungstag der Anmeldung: 16.10.2002
(73) Patentinhaber: Innovatis AG, 33607 Bielefeld (DE)
(72) Erfinder: Bittner, Christoph, 33649 Bielefeld (DE)
(74) Vertreter: Heiland, Karsten, Dipl.-Ing.
(86) Internationale Anmeldenummer: PCT/EP2000/010030
(87) Internationale Veröffentlichungsnummer: WO 2001/027591

(56) Entgegenhaltungen:
- EP-A- 0 277 789
- WO-A-87/04247
- DE-A- 4 032 002

## Beschreibung

Die Erfindung bezieht sich auf ein Verfahren gemäß dem Oberbegriff des Patentanspruches 1, sowie auf eine Vorrichtung zur Durchführung des Verfahrens.

Ein solches Verfahren, wie es beispielsweise in der DE 40 32 002 C2 gezeigt ist, kommt in geschlossenen Behältern und Anlagen zum Einsatz, in dem Mikroorganismen unter sterilen Bedingungen kultiviert werden. Zur automatischen Regelung des Kultivierungsprozesses werden Meßwerte benötigt, die Aufschluß über den Zustand der Kulturflüssigkeit geben, insbesondere über die Zellkonzentration. Eine Regelung funktioniert aber nur dann zufriedenstellend, wenn diese Werte schnell, d.h. on-line gemessen werden. Dafür sind alle off-line-Methoden unbrauchbar wie z.B. die manuelle Probenahme und Analyse. Auch der Zusatz von analytischen Reagentien zum Reaktorinhalt ist üblicherweise nicht erlaubt.

Man verwendet dehalb gerne optische Detektoren zur Messung der Lichtabsorption, Lichtstreuung oder die Fluoreszenz der Zellen. Leider unterscheiden diese Verfahren in der Regel nicht zwischen den Zellen und der sie umgebenden Flüssigkeit. Es ist daher schwierig, detaillierte Aussagen über die Zellpopulation im abgeschlossenen Bioreaktor zu bekommen.

Das Verfahren und die Vorrichtung gemäß der DE 40 32 002 C2 stellen deshalb einen wesentlichen Fortschritt dar. Bei diesem Verfahren werden die Zellen beleuchtet, durch ein Mikroskop und eine Videokamera abgebildet und diese Abbildung durch eine elektronische Bildverarbeitung analysiert. Eine Entnahme der Zellen ist nicht nötig. Das mikroskopierte Volumen ist optisch oder mechanisch definiert, ähnlich einer Zählkammer. Durch die Bildverarbeitung können selektiv Zellen erfaßt werden und ihre Konzentration. Größe und Morphologie bestimmt werden. Die Lösung, in der die Zellen schwimmen, Begleitstoffe. Kontaminationen und Luftblasen können zuverlässig von den Zellen unterschieden werden. Die In situ-Mikroskopie liefert als Messwerte die Zellkonzentration und Zellgrößenverteilung. Aus beiden kann auf die Biotrockenmasse geschlossen werden.

Darüber hinaus ist jedoch die Bestimmung der Vitalität der Kulturflüssigkeit erwünscht. Die Vitalität einer Zellprobe ist definiert als das Verhältnis der lebenden Zellen dividiert durch die Gesamtzahl der Zellen (Summe der lebenden und toten Zellen). Die Vitalität ist ein wichtiger Parameter für Kultivierungen im industriellen Maßstab. In diesen Prozessen wird die Biomasse mehrfach verwendet, bis der Totzellanteil so hoch ist, daß eine neue Zellkultur eingesetzt werden muss. Ein anderer Einsatzzweck ist das Animpfen von Kultivierungen: kennt man die Vitalität einer Zellprobe und die Zellkonzentration, kann das benötigte Volumen zum Animpfen einer Kultur berechnet werden (z.B. beim Anstellen der Hefe in Brauereien). Es wäre deshalb ein großer Fortschritt, wenn die absolute Zellkonzentration und die Vitalität mit Hilfe der gleichen Sonde bestimmt werden können. Allerdings fehlt bislang eine Möglichkeit, die Zellvitalität als zusätzlichen Parameter für jede Zelle einzeln zu erfassen.

Der Erfindung liegt daher die Aufgabe zugrunde, ein Verfahren aufzuzeigen, mit dem bei In situ-mikroskopischer Beobachtung von Zellen im Bioreaktor eine direkte Beurteilung der Vitalität einzelner Zellen möglich ist, und eine Vorrichtung zur Durchführung des Verfahrens zu schaffen.

Das Verfahren und eine Vorrichtung zur Lösung dieser Aufgabe sind in den Patentansprüchen 1 und 10 offenbart.

Beim erfindungsgemäßen Verfahren wird die Beleuchtung der Zellen als Dunkelfeldbeleuchtung durchgeführt. Bei dieser Beleuchtungsanordnung gelangt kein direktes Licht der beleuchtenden Lichtquelle, sondern nur das von den beleuchteten Zellen abgegebene, also beispielsweise gestreute Licht zur Abbildung. Bei der Auswertung der Abbildung wird ein Vergleich der Intensitäten des vom Zellinneren und des vom Zellrand abgegebenen Lichtes durchgeführt. Dadurch können lebende und tote Zellen unterschieden werden, so daß die Vitalität der Kulturflüssigkeit bestimmt werden kann.

Das Verfahren nutzt die Eigenschaft der Zellen, Licht abzulenken. Ein lebende Zelle lenkt das Licht im wesentlichen in Vorwärtsrichtung, während eine tote Zelle das Licht diffus nach allen Seiten ablenkt. Verwendet man eine optische Anordnung zur winkelselektiven Erfassung des von den Zellen abgelenkten Lichts, also eine Dunkelfeldanordnung, und baut diese in ein In situ-Mikroskop ein, ist es möglich, die Zellvitalität direkt im Reaktor zu erfassen.

Weitere bevorzugte Ausgestaltungen sind in den Unteransprüchen 2 bis 9 sowie 11 bis 20 angegeben.

Die Erfindung wird nachfolgend anhand der Zeichnungen näher erläutert. Es zeigen:
- Fig. 1: zeigt eine schematische Darstellung einer ersten Ausführungsform der erfindungsgemäßen Vorrichtung;
- Fig. 2: zeigt eine zweite Ausführungsform mit einer veränderten Beleuchtungsanordnung;
- Fig. 3: zeigt eine Ausführungsform, die neben der Dunkelfeldmikroskopie zur Hellfeldmikroskopie vorgesehen ist;
- Fig. 4: zeigt eine Ausführungsform, die neben der Dunkelfeldmikroskopie zur Fluoreszenzmikroskopie vorgesehen ist:
- Fig. 5: zeigt eine Ausführungsform, die neben der Dunkelfeldmikroskopie zur Phasenkontrastmikroskopie vorgesehen ist; und
- Fig. 6: zeigt eine Ausführungsform. die neben der Dunkelfeldmikroskopie zur Interferenzkontrastmikroskopie vorgesehen ist.

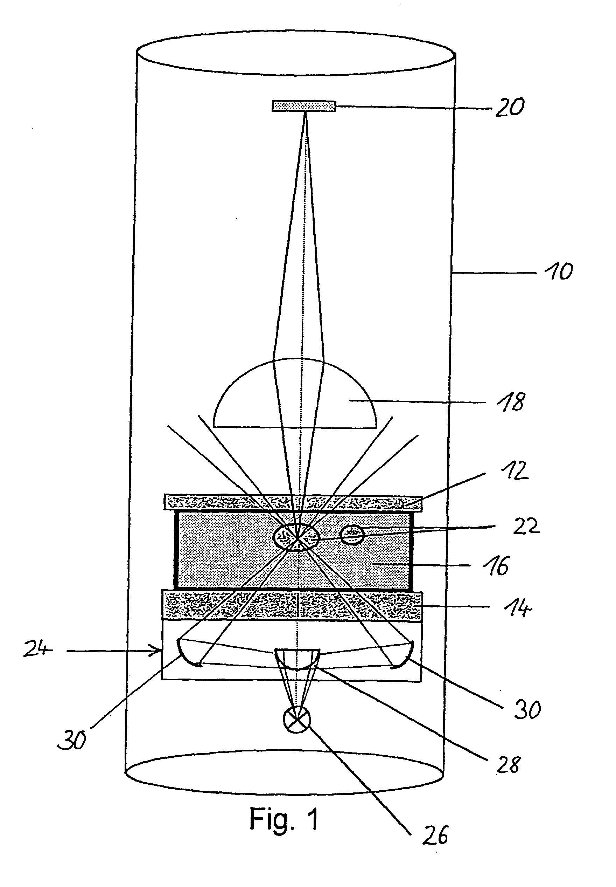

Die in Fig. 1 gezeigte Vorrichtung umfaßt einen zylindrischen Tubus 10, der in die Kulturflüssigkeit im nicht dargestellten Bioreaktor eintaucht. Innerhalb des Tubus 10 befinden sich zwei parallel und senkrecht zur Tubusachse angeordnete Glasplatten 12,14. Der Zwischenraum zwischen den Glasplatten 12,14 bildet ein Probenvolumen 16 der zu untersuchenden Kulturflüssigkeit. Damit die Kulturflüssigkeit das Probenvolumen 16 frei durchströmen kann, sind im Bereich des Probenvolumens 16 nicht dargestellte Öffnungen gegenüberliegend in der Wand des Tubus 10 angeordnet. Da es vorteilhaft ist, die Flüssigkeit im Probenvolumen 16 während der Untersuchung ruhigzustellen, sind die Öffnungen bei Bedarf zu verschließen. Darüber hinaus ist eine der Glasplatten 14 entlang der Tubusachse verstellbar, so daß die Dicke des Probenvolumens 16 veränderbar ist.

Außerhalb des Probenvolumens 16 ist ein Mikroskop-Objektiv 18 angeordnet, dessen optische Achse mit der Tubusachse zusammenfällt. Auf der den Glasplatten 12,14 gegenüberliegenden Seite des Objektivs 18 ist ein elektronischer Bildaufnehmer 20 angeordnet, dessen Aufnahmefläche senkrecht zur optischen Achse des Objektivs 18 steht. Entsprechend der Brennweite des Objektivs 18 sind die Abstände des Objektivs 18 von der Glasplatte 14 sowie des Bildaufnehmers 34 vom Objektiv 18 so gewählt, daß sich ein Objekt, also insbesondere eine zu untersuchende Zelle 22, innerhalb des Probenvolumens 16 auf der Aufnahmefläche des Bildaufnehmers 20 scharf abbilden läßt.

Auf der dem Objektiv 18 und dem Bildaufnehmer 20 gegenüberliegenden Seite der Glasplatten 12,14 befindet sich ein Dunkelfeldkondensor 24 mit einer im wesentlichen punktförmigen Lichtquelle 26, einem auf der optischen Achse des Objektivs 18 angeordneten Konvexspiegel 28 und einem Konkavspiegel 30, der radialsymmetrisch und etwa ringförmig um die optische Achse herum angeordnet ist und in Fig. 1 nur teilweise dargestellt ist. Es handelt sich bei dem in Fig. 1 gezeigten Dunkelfeldkondensor 24 um einen sogenannten Kardiolidkondensor. Das Licht der Lichtquelle 26 wird vom Konvexspiegel 28 auf den Konkavspiegel 30 reflektiert, welcher es als schwach konvergentes rotationssymmetrisches Bündel schräg zur optischen Achse des Objektivs 18 in das Probenvolumen 16 reflektiert. Die vom Konkavspiegel 30 ausgehenden Lichtbündel kreuzen sich somit innerhalb des Probenvolumens 16 und treffen auf Zellen 22 innerhalb des Probenvolumens, die dadurch beleuchtet werden.

Im folgenden wird die Funktionsweise der Anordnung in Fig. 1 beschrieben. Zur Ruhigstellung der Kulturflüssigkeit innerhalb des Probenvolumens 16 werden die Öffnungen in der Wand des Tubus 10 verschlossen, so daß die Strömung unterbrochen wird. Anschließend wird die verschiebbare Glasplatte 14 in Richtung der feststehenden Glasplatte 12 bewegt, bis der Zwischenraum zwischen den beiden Glasplatten 12,14 so klein ist, daß das Probenvolumen 16 nur noch durch eine dünne Flüssigkeitsschicht gebildet wird. Die Dicke dieser Schicht sollte der Schärfentiefe des Objektivs 18 entsprechen, so daß alle Zellen 22 innerhalb des Probenvolumens 16 scharf abzubilden sind.

Das Licht des Dunkelfeldkondensors 24 trifft auf die Zellen 22, gelangt jedoch nicht direkt ins Objektiv 18, da dieses außerhalb des Strahlengangs des Dunkelfeldkondensors 24 angeordnet ist. Somit gelangt nur das von den beleuchteten Zellen 22 abgegebene Licht ins Objektiv 18, welches ein scharfes Bild der Zellen 22 auf der lichtempfindlichen Aufnahmefläche des Bildaufnehmers 20 erzeugt. Diese Abbildung wird digitalisiert und durch eine Bildverarbeitungssoftware analysiert.

Zur Unterscheidung lebender und toter Zellen 22 wird die Tatsache ausgenutzt. daß bei der hier beschriebenen Abbildung durch eine Dunkelfeldbeleuchtung das Innere lebender Zellen wesentlich dunkler erscheint als der Zellrand, während bei toten Zellen das Zellinnere etwa so hell wie der Rand erscheint. Durch die Bildverarbeitung kann deshalb auf einfache Weise eine Beurteilung der Vitalität der Kulturflüssigkeit vorgenommen werden, indem bei einzelnen Zellen die Helligkeit des Zellrandes mit der des Zellinneren verglichen wird, auf dieser Grundlage eine Entscheidung darüber getroffen wird, ob es sich um eine lebende oder eine tote Zelle handelt, und in Folge der Anteil der lebenden Zellen an der Gesamtzahl der Zellen ermittelt wird.

Auf das Ruhigstellen der Kulturflüssigkeit im Probenvolumen 16 durch Verschließen der Öffnungen kann verzichtet werden, wenn die Zellen 22 während der Belichtungszeit des Bildaufnehmers (etwa 1/50 sec) nur kurzzeitig beleuchtet werden, so daß trotz der Bewegung der Zellen 22 eine scharfe Abbildung erzeugt werden kann. Diese kurzzeitige Beleuchtung wird durch einen gepulsten Betrieb der Lichtquelle 26 erreicht. Als Lichtquelle 26 eignen sich beispielsweise Blitzlampen, LEDs und Laser.

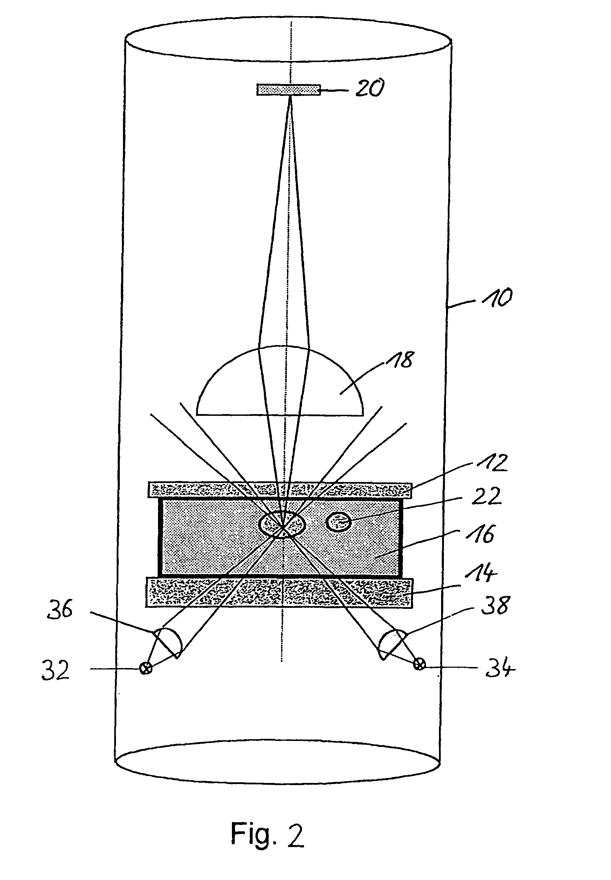

Fig 2 zeigt eine zweite Ausführungsform ähnlich der Anordnung aus Fig. 1, die einen Dunkelfeldkondensor mit einer Anzahl punktförmiger Lichtquellen 32,34 umfaßt, von denen in Fig. 2 zwei gegenüberliegende Lichtquellen beispielhaft gezeigt sind. Diese Lichtquellen 32,34 sind kranzförmig und rotationssymmetrisch um die optische Achse herum angeordnet. Ihr Licht wird durch Linsen 36,38, deren optische Achsen in einem Punkt innerhalb des Probenvolumens 16 einander kreuzen, in das Probenvolumen 16 hinein fokussiert, so daß sich ein Strahlengang ergibt, der dem des Kardiolidkondensors 18 aus Fig. 1 entspricht.

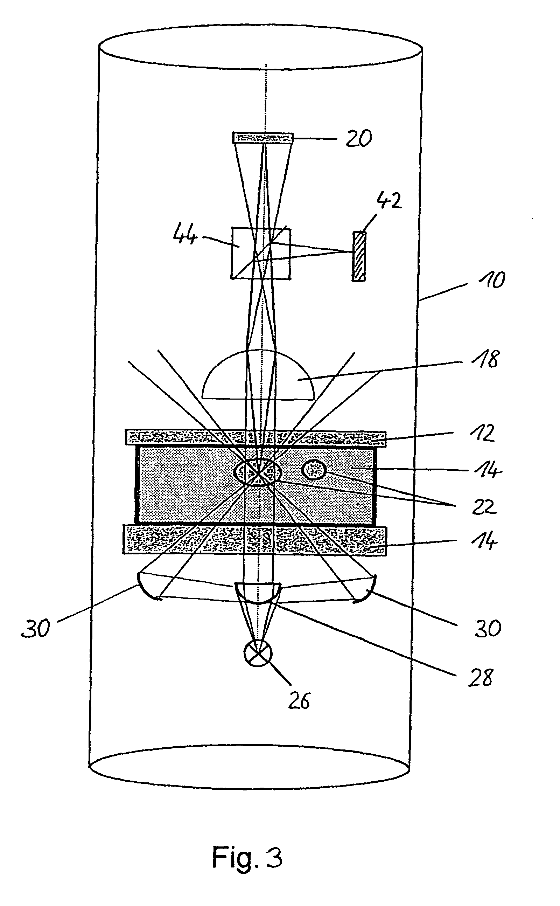

Fig. 3 zeigt eine weitere Ausführungsform der erfindungsgemäßen Vorrichtung, die es ermöglicht, außer der Dunkelfeldmikroskopie gleichzeitig auch Hellfeldmikroskopie durchzuführen. Zu diesem Zweck ist die Anordnung mit einem Kondensor 24 versehen, der eine Anordnung mit einer etwa punktförmigen Lichtquelle 26, einem Konvexspiegel 28 und einem ringförmig um die optische Achse des Mikroskopobjektivs 18 angeordneten Konkavspiegel 30 aufweist, die dem Kardiolidkondensor 24 aus Fig. 1 entspricht und die dort beschriebene Dunkelfeldbeleuchtung des Probenvolumens 16 ermöglicht. Im Unterschied zum Kondensor 24 aus Fig. 1 ist jedoch der Konvexspiegel 28 so ausgebildet, daß er einen Teil des von der Lichtquelle 26 ausgehenden Lichts zum Konkavspiegel 30 reflektiert, jedoch den übrigen Anteil des Lichts durchläßt. Dieser durchgelassene Anteil durchleuchtet das Probenvolumen 16, so daß der von der Kulturflüssigkeit und den Zellen 22 durchgelassene Anteil in das Objektiv 18 eintreten und eine Abbildung auf dem Bildaufnehmer 20 erzeugen kann. Insgesamt werden somit zwei Abbildungen erzeugt: einerseits durch die Dunkelfeldbeleuchtung der Zellen 22 und Abbildung der beleuchteten Zellen, und andererseits eine Transmissionsabbildung des von den Zellen 22 transmittierten Durchlichtes der Hellfeldbeleuchtung. Zur Trennung der beiden Abbildungen ist auf der optischen Achse zwischen dem Mikroskopobjektiv 18 und dem Bildaufnehmer 20 ein Strahlteilerwürfel angeordnet, der einen Anteil des in den Strahlteiler 44 eintretenden Lichts in einer Richtung senkrecht zur optischen Achse reflektiert. Dieses Licht trifft auf einen zweiten Bildaufnehmer 42, der in gleicher Weise wie der erste Bildaufnehmer 20 zur Erzeugung und digitalen Verarbeitung einer Abbildung vorgesehen ist.

Zur Bildverarbeitung ist es notwendig, diese beiden Abbildungen optisch voneinander zu trennen. Dies geschieht, indem das für die beiden Beleuchtungsarten, also für die Dunkelfeldbeleuchtung und die Hellfeldbeleuchtung verwendete Licht unterschiedlich polarisiert wird und das aus dem Probenvolumen 16 in das Mikroskopobjektiv 18 eintretende Licht entsprechend den unterschiedlichen Polarisationsrichtungen im Abbildungsstrahlengang durch den polarisierenden Strahlteiler 44 wieder getrennt wird, so daß das vom Strahlteiler 44 durchgelassene Licht einer ersten Polarisationsrichtung und das vom Strahlteiler 44 reflektierte Licht der dazu senkrecht stehenden Polarisationsrichtung entspricht. Die Polarisationskodierung des für die unterschiedlichen Beleuchtungen verwendeten Lichts geschieht durch eine polarisierende Beschichtung des Konvexspiegels 28, die bewirkt, daß das vom Konvexspiegel 24 reflektierte Licht zur Dunkelfeldbeleuchtung in einer ersten Richtung, also beispielsweise senkrecht zur Zeichen-ebene, polarisiert ist, so daß das von den Zellen 22 aufgrund der Dunkelfeldbeleuchtung ins Mikroskopobjektiv 18 abgegebene Licht ebenfalls dieser Polarisationsrichtung entspricht. Der Strahlteiler 44 ist so angeordnet, daß er das Licht dieser Polarisationsrichtung reflektiert und auf dem zweiten Bildaufnehmer 42 eine Abbildung erzeugt, die von der Dunkelfeldbeleuchtung herrührt. Hingegen ist das vom Konvexspiegel 28 durchgelassene Licht senkrecht zu dem reflektierten Licht polarisiert, so daß das von den Zellen 22 transmittierte und in das Mikroskopobjektiv 18 eintretende Licht ebenfalls in dieser Richtung polarisiert ist und vom Strahlteiler 44 ebenfalls durchgelassen wird, so daß auf dem ersten Bildaufnehmer 20 eine Abbildung erzeugt wird, die der Hellfeldbeleuchtung entspricht.

In vergleichbarer Weise kann das für die Dunkelfeldbeleuchtung und die Hellfeldbeleuchtung verwendete Licht farblich kodiert werden, so daß das zur Dunkelfeldbeleuchtung verwendete Licht eine andere Wellenlänge aufweist als das transmittierte Licht der Hellfeldbeleuchtung. Dies ermöglicht eine einfache Unterscheidung der durch die verschiedenen Beleuchtungsarten erzeugten Abbildungen durch entsprechende Farbfilter, die auf nicht gezeigte Weise vor den jeweiligen Bildaufnehmern 20,42 anzubringen sind.

Es ist auch möglich, auf den zweiten Bildaufnehmer 42 und den Strahlteiler 44 zu verzichten, so daß beide Abbildungen auf einem einzigen Bildaufnehmer 20 erzeugt werden. In diesem Fall wird die Eigenschaft des digitalen Bildaufnehmers ausgenutzt, daß die einzelnen Pixel des Bildaufnehmers jeweils nur für eine Farbe (rot, grün oder blau) empfindlich sind. Die Abbildungen unterschiedlicher Farben lassen sich nun separieren, indem die farbempfindlichen Pixel jeweils einer Farbe ausgelesen und zu einer Abbildung kombiniert werden.

Eine sehr einfache Art der Farbkodierung besteht darin, eine spektral breitbandige Lichtquelle 26 vorzusehen und den Konvexspiegel 28 dichroitisch zu bedampfen, so daß er Licht einer Wellenlänge reflektiert und Licht einer anderen Wellenlänge durchläßt.

Im übrigen ist es möglich, für beide Beleuchtungsstrahlengänge unterschiedliche monochromatische Lichtquellen wie etwa LEDs oder Laser vorzusehen.

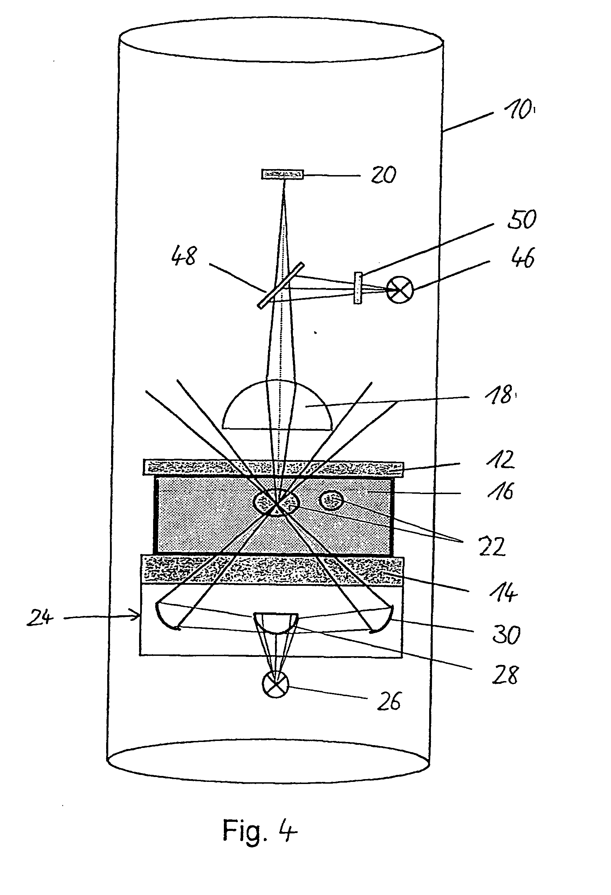

Die in Fig. 4 gezeigte Anordnung ist dazu geeignet, außer der Dunkelfeldmikroskopie auch Fluoreszenzmikroskopie durchzuführen. Die Anordnung ist einerseits mit dem aus Fig. 1 bekannten Dunkelfeldkondensor 24 versehen. Darüber hinaus ist in dem dem Dunkelfeldkondensor 24 gegenüberliegenden Tubusbereich eine weitere Lichtquelle 46 vorgesehen, die gegenüber der optischen Achse des Mikroskopobjektivs 18 versetzt ist und deren Licht von einem Strahlteiler 48 um 90 Grad in Richtung des Mikroskopobjektivs 18 reflektiert wird und von diesem in das Probenvolumen 16 hineinfokussiert wird. Zwischen der Fluoreszenzlichtquelle 46 und dem Strahlteiler 48 ist ein Filter 50 angeordnet, der das von der Fluoreszenzlichtquelle 46 ausgehende Anregungslicht spektral einengt. Durch das Anregungslicht werden die Zellen 22 im Probenvolumen 16 zur Fluoreszenz angeregt, und das abgegebene Fluoreszenzlicht tritt in umgekehrter Richtung durch das Mikroskopobjektiv 18 und trifft auf den Strahlteiler 48. Der Strahlteiler 48 ist so ausgebildet, daß er das spektral zu höheren Wellenlängen verschobene Fluoreszenzlicht im Gegensatz zum Anregungslicht durchläßt und eine Fluoreszenzlichtabbildung auf dem Bildaufnehmer 20 ermöglicht. Es werden somit zwei unterschiedliche Abbildungen auf dem Bildaufnehmer 20 erzeugt, nämlich die durch die Dunkelfeldbeleuchtung in üblicher Weise erzeugte Abbildung und eine Abbildung des Fluoreszenzlichts. Die Trennung der Dunkelfeld- und Fluoreszenzbilder geschieht durch die bereits beschriebene Separation der Auszüge des Bildaufnehmers 20, d. h. durch die Trennung der Daten von Pixeln mit unterschiedlicher Farbempfindlichkeit. Eine weitere Möglichkeit besteht in der zeitlichen Trennung der Abbildungen, indem die Lichtquelle 26 des Dunkelfeldkondensors 24 und die Fluoreszenzlichtquelle 46 in rascher Folge wechselweise gepulst werden und die Abbildungen auf dem Bildaufnehmer 20 zeitlich getrennt ausgelesen werden.

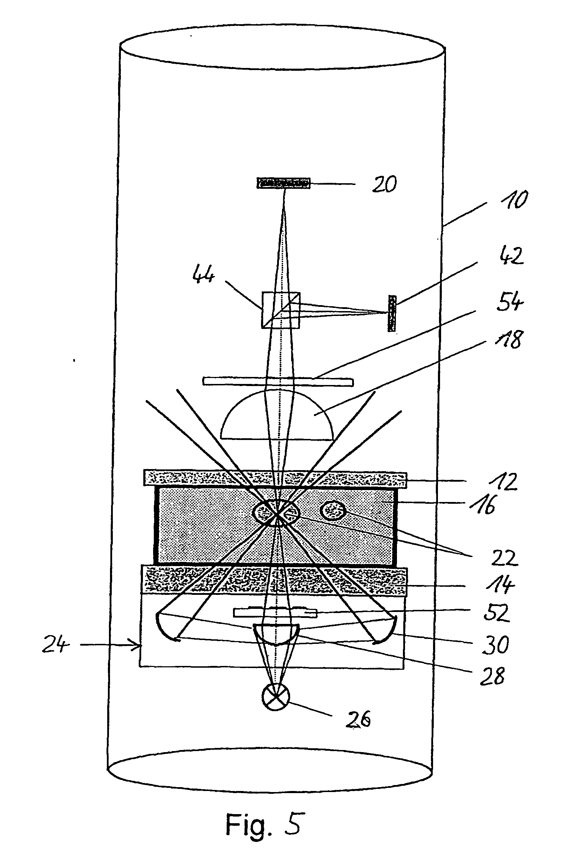

Fig. 5 zeigt eine Anordnung, die außer der Dunkelfeldmikroskopie gleichzeitig zur Phasenkontrastmikroskopie geeignet ist. Die gezeigte Anordnung entspricht im wesentlichen Fig. 3. Der Konvexspiegel 26 des Dunkelfeldkondensors 24 ist polarisierend bedampft, so daß er Licht einer Polarisationsrichtung reflektiert und Licht der dazu senkrecht stehenden Polarisationsrichtung transmittiert, so daß gleichzeitig eine Dunkelfeldbeleuchtung und eine Hellfeldbeleuchtung des Probenvolumens 16 durchgeführt werden. Wie in Fig. 3 ist im Abbildungsstrahlengang ein Strahlteiler 44 vorgesehen, der Licht einer Polarisationsrichtung reflektiert und das Licht der dazu senkrecht stehenden Polarisationsrichtung transmittiert, so daß auf einem in der optischen Achse des Mikroskopobjektivs 18 angeordneten Bildaufnehmer 20 eine Abbildung des transmittierten Lichts und in der Reflexionsrichtung auf einem weiteren Bildaufnehmer 42 eine Abbildung des reflektierten Lichts erzeugt werden kann. Auf diese Weise lassen sich die Abbildungen, die durch die unterschiedlichen Beleuchtungsarten erzeugt werden, anhand der Polarisation unterscheiden, wie es im Zusammenhang mit Fig. 3 hinlänglich beschrieben ist.

Gegenüber Fig. 3 ist im Hellfeldstrahlengang eine Anordnung zur Phasenkontrastmikroskopie angeordnet. Diese umfaßt eine direkt hinter dem Konvexspiegel angeordnete Ringblende 52 sowie eine zwischen dem Mikroskopobjektiv 18 und dem Strahlteiler 44 angeordnete Phasenplatte 54. Die Ringblende 52 und die Phasenplatte 54 stehen senkrecht zur optischen Achse des Mikroskopobjektivs 18. Das durch den Konvexspiegel 28 transmittierte Licht der Lichtquelle 26 passiert zunächst die Ringblende 52 und tritt, nachdem es das Probenvolumen 16 passiert hat, in das Mikroskopobjektiv 18 ein, wo es durch die Phasenplatte 54 und den Strahlteiler 44 hindurch auf den ersten Bildaufnehmer 20 fokussiert wird. Durch diese an sich bekannte Phasenkontrastanordnung wird ein kontrastreicheres Bild erzeugt als im Falle der einfachen, in Fig. 3 gezeigten Hellfeldbeleuchtungsanordnung.

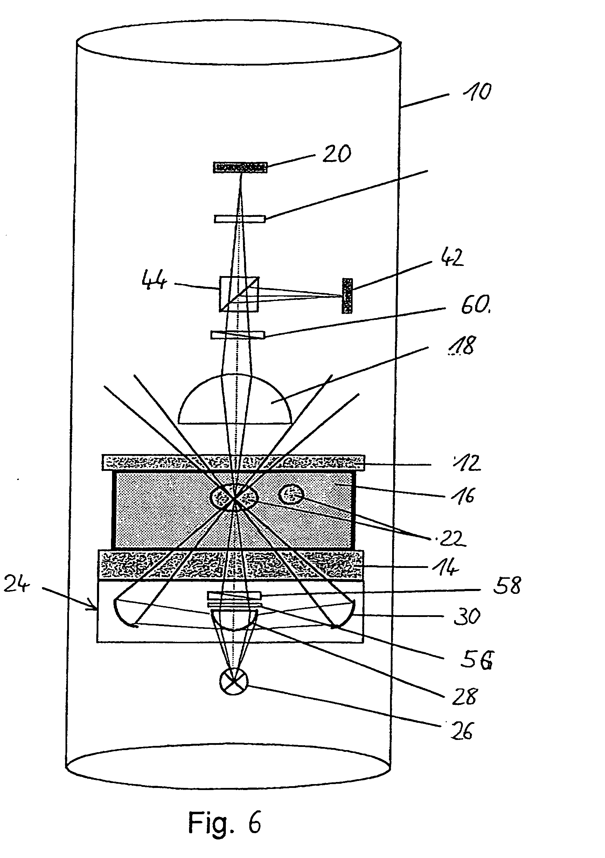

Die in Fig. 6 gezeigte Anordnung ist neben der Dunkelfeldmikroskopie außerdem zur Interferenzkontrastmikroskopie vorgesehen. Im wesentlichen entspricht dieser Aufbau der in Fig. 5 gezeigten Anordnung zur Phasenkontrastmikroskopie, jedoch ist in Fig. 6 die Ringblende 52 durch eine λ/4-Platte 56 sowie ein dahinter angeordnetes Wollaston-Prisma 58 ersetzt, und anstelle der Phasenplatte 54 aus Fig. 5 ist ein zweites Wollaston-Prisma 60 in den Abbildungsstrahlengang zwischen dem Mikroskopobjektiv 18 und dem Strahlteiler 44 eingesetzt. Außerdem ist in dem Transmissionsstrahlengang zwischen dem Strahlteiler 44 und dem ersten Bildaufnehmer 20 ein zusätzlicher Analysator 62 eingefügt.

Der Konvexspiegel 28 ist in bekannter Weise polarisierend bedampft, so daß das durch den Konvexspiegel 28 transmittierte Licht polarisiert ist. Dieses Licht passiert die λ/4-Platte 56 und das erste Wollaston-Prisma 58, welches jeden einzelnen Lichtstrahl in zwei Strahlen unterschiedlicher Polarisation aufteilt, die in das Probenvolumen 16 einfallen. Treffen sie dort auf ein Objekt wie etwa eine Zelle 22, so kann dieses einen Gangunterschied zwischen den unterschiedlichen Lichtstrahlen verursachen. Die das Probenvolumen 16 passierenden Strahlen werden durch das Mikroskopobjektiv 18 gebündelt und fallen auf das zweite Wollaston-Prisma 60, das die beiden Strahlen wieder vereint. Diese Strahlen fallen durch den Strahlteiler 44 auf den ersten Bildaufnehmer 20 und erzeugen dort eine Interferenzkontrastabbildung. Durch den Gangunterschied, der durch die Objekte im Probenvolumen 16 erzeugt wird, wird ein sehr kontrastreiches Bild erzeugt, wobei der Kontrast sich durch Verschieben des zweiten Wollaston-Prismas 60 entlang der optischen Achse des Mikroskopobjektivs der optischen Achse des Mikroskopobjektivs 18 verändern läßt.

Wie bei den bereits besprochenen Anordnungen läßt sich außer der Interferenzkontrastabbildung eine Abbildung der vom Strahlteiler 44 reflektierten Lichtstrahlen auf dem zweiten Bildaufnehmer 42 erzeugen, die in bekannter Weise von der Dunkelfeldbeleuchtung herrührt.

## Patentansprüche

1. Verfahren zur Charakterisierung einer Kulturflüssigkeit, insbesondere in einem Bioreaktor, in dem in situ durch Beleuchtung der in der Kulturflüssigkeit enthaltenen Zellen (22), mikroskopische Abbildung der Zellen (22) und durch eine Bildauswertung der Abbildung die Kulturflüssigkeit analysiert wird, **dadurch gekennzeichnet, daß** die Beleuchtung als Dunkelfeldbeleuchtung durchgeführt wird, und daß die Bildauswertung einen Vergleich der Intensitäten des vom Zellinneren und des vom Zellrand abgegebenen Lichtes umfaßt, durch welchen Vergleich eine Unterscheidung lebender und toter Zellen (22) zur Bestimmung der Vitalität der Kulturflüssigkeit durchgeführt wird.

2. Verfahren nach Anspruch 1, **dadurch gekennzeichnet, daß** außer der Dunkelfeldbeleuchtung eine Hellfeldbeleuchtung durchgeführt wird.

3. Verfahren nach Anspruch 1 oder 2, **dadurch gekennzeichnet, daß** außerdem eine Beleuchtung zur Fluoreszenzanregung durchgeführt wird und die Bildauswertung eine Beobachtung des von den Zellen (22) abgegebenen Fluoreszenzlichts umfaßt.

4. Verfahren nach einem der Ansprüche 1 bis 3, **dadurch gekennzeichnet, daß** außerdem eine Interferenzkontrastbeobachtung der Zellen (22) durchgeführt wird.

5. Verfahren nach einem der Ansprüche 1 bis 4, **dadurch gekennzeichnet, daß** außerdem eine Phasenkontrastbeobachtung der Zellen (22) durchgeführt wird.

6. Verfahren nach einem der Ansprüche 2 bis 5, **dadurch gekennzeichnet, daß** für verschiedene Beleuchtungsarten unterschiedlich polarisiertes Licht verwendet wird und die Abbildungen, die durch die verschiedenen Beleuchtungsarten erzeugt werden, anhand der unterschiedlichen Polarisationen des die Abbildungen erzeugenden Lichts unterschieden werden.

7. Verfahren nach einem der Ansprüche 2 bis 6, **dadurch gekennzeichnet, daß** für verschiedene Beleuchtungsarten Licht mit unterschiedlichen Wellenlängen verwendet wird und die Abbildungen, die durch die verschiedenen Beleuchtungsarten erzeugt werden, anhand der unterschiedlichen Wellenlängen des die Abbildungen erzeugenden Lichts unterschieden werden.

8. Verfahren nach einem der Ansprüche 1 bis 7, **dadurch gekennzeichnet, daß** die Beleuchtung mit gepulstem Licht durchgeführt wird.

9. Verfahren nach einem der Ansprüche 1 bis 8, **dadurch gekennzeichnet, daß** während der Abbildung zur Bildauswertung ein abzubildendes Probenvolumen (16) der Kulturflüssigkeit zeitweise ruhiggestellt wird.

10. Vorrichtung zur Charakterisierung einer Kulturflüssigkeit, insbesondere in einem Bioreaktor, mit einer Beleuchtungsanordnung (24) zur Beleuchtung eines Probenvolumens (16) der Kulturflüssigkeit, einem Mikroskop-Objektiv (18) zur Abbildung von Zellen (22) innerhalb des Probenvolumens (16) und einer Bildauswertungs-Einrichtung (20) zur Analyse der Abbildung, **dadurch gekennzeichnet, daß** die Beleuchtungsanordnung (24) zur Dunkelfeld-Beleuchtung vorgesehen ist und die Bildauswertungs-Einrichtung (20) zum Vergleich der Intensitäten des vom Zellinneren und des vom Zellrand abgegebenen Lichtes und zur Unterscheidung lebender und toter Zellen auf der Grundlage dieses Vergleichs ausgebildet ist.

11. Vorrichtung nach Anspruch 10, **dadurch gekennzeichnet, daß** die Beleuchtungsanordnung (26), das Mikroskop-Objektiv (18) und die Bildauswertungs-Einrichtung (20) innerhalb eines Tubus (10) angeordnet sind, dessen Wand mit Öffnungen zum Durchströmen der Kulturflüssigkeit durch das Probenvolumen (16) versehen ist.

12. Vorrichtung nach Anspruch 11, **dadurch gekennzeichnet, daß** die Dicke des Probenvolumens (16) durch zwei senkrecht zur optischen Achse des Mikroskop-Objektivs (18) stehende Glasplatten (12,14) begrenzt wird, von denen mindestens eine entlang der optischen Achse verstellbar ist.

13. Vorrichtung nach Anspruch 11 oder 12, **dadurch gekennzeichnet, daß** der Tubus (10) zum Ruhigstellen des Probenvolumens (16) mit Einrichtungen zum Verschließen der Öffnungen versehen ist.

14. Vorrichtung nach einem der Ansprüche 10 bis 13, **dadurch gekennzeichnet, daß** die Beleuchtungsanordnung (24) zum gepulsten Betrieb vorgesehen ist.

15. Vorrichtung nach einem der Ansprüche 10 bis 14, **dadurch gekennzeichnet, daß** die Beleuchtungsanordnung (24) außerdem zur Hellfeld-Beleuchtung ausgebildet ist.

16. Vorrichtung nach einem der Ansprüche 10 bis 15, **gekennzeichnet durch** eine Fluoreszenzlichtquelle (42) zur Fluoreszenzanregung der Kulturflüssigkeit, wobei die Bildauswertungs-Einrichtung (20) zur Analyse des von den Zellen (22) abgegebenen Fluoreszenzlichts vorgesehen ist.

17. Vorrichtung nach einem der Ansprüche 10 bis 16, **gekennzeichnet durch** ein im Strahlengang der Beleuchtungsanordnung (24) angeordnetes erstes Wollaston-Prisma (58) und ein im Abbildungs-Strahlengang angeordnetes zweites Wollaston-Prisma (60) zur Interferenzkontrastbeobachtung der Zellen (22).

18. Vorrichtung nach einem der Ansprüche 10 bis 17, **gekennzeichnet durch** eine im Strahlengang der Beleuchtungsanordnung (24) angeordnete Ringblende (52) und eine im Abbildungs-Strahlengang angeordnete Phasenplatte (60) zur Phasenkontrastbeobachtung der Zellen (22).

19. Vorrichtung nach einem der Ansprüche 10 bis 18, **dadurch gekennzeichnet, daß** im Strahlengang der Beleuchtungsanordnung (24) und/oder der Fluoreszenzlichtquelle (42) Polarisationseinrichtungen (24) und im Abbildungs-Strahlengang polarisationsselektive Einrichtungen (44) angeordnet sind.

20. Vorrichtung nach einem der Ansprüche 10 bis 19, **dadurch gekennzeichnet, daß** im Strahlengang des von der Beleuchtungsanordnung (24) und/oder der Fluoreszenzlichtquelle (42) ausgehenden Lichts Monochromatisierungs-Einrichtungen (24,50) vorgesehen sind oder die Lichtquellen (26,46) selbst monochromatisch sind, und daß im Abbildungs-Strahlengang wellenlängenselektive Einrichtungen (44) angeordnet sind.

21. Vorrichtung nach Anspruch 19 oder 20, **dadurch gekennzeichnet, daß** als polarisations- bzw. wellenlängenselektive Einrichtung ein Strahlteiler (44) vorgesehen ist, der Licht einer ersten Polarisation bzw. Wellenlänge zur Abbildung auf einem ersten Bildaufnehmer (20) durchläßt und Licht einer zweiten Polarisation bzw. Wellenlänge auf einem zweiten Bildaufnehmer (42) reflektiert.

## Claims

1. Method for characterizing a culture liquid, in particular in a bioreactor, in which the culture liquid is analyzed in situ by illuminating the cells (22) contained in the culture liquid, by microscopic imaging of the cells (22) and by evaluating the image, **characterized in that** the illumination is carried out as dark-field illumination, and **in that** the image evaluation comprises a comparison of the intensities of the light output by the interior of the cell and by the edge of the cell, by means of which comparison living and dead cells (22) are distinguished in order to determine the vitality of the culture liquid.

2. Method according to Claim 1, **characterized in that** a bright-field illumination is carried out apart from the dark-field illumination.

3. Method according to Claim 1 or 2, **characterized in that** an illumination for fluorescent excitation is also carried out, and the image evaluation comprises an observation of the fluorescent light output by the cells (22).

4. Method according to one of Claims 1 to 3, **characterized in that** an interference contrast observation of the cells (22) is also carried out.

5. Method according to one of Claims 1 to 4, **characterized in that** a phase contrast observation of the cells (22) is also carried out.

6. Method according to one of Claims 2 to 5, **characterized in that** differently polarized light is used for various types of illumination, and the images that are produced by the various types of illumination are distinguished with the aid of the different polarizations of the light producing the images.

7. Method according to one of Claims 2 to 6, **characterized in that** light of different wavelengths is used for various types of illumination, and the images that are produced by the various types of illumination are distinguished with the aid of the different wavelengths of the light producing the images.

8. Method according to one of Claims 1 to 7, **characterized in that** the illumination is carried out with pulsed light.

9. Method according to one of Claims 1 to 8, **characterized in that** a sample volume (16) of the culture liquid that is to be imaged is temporarily immobilized during imaging for the purpose of image evaluation.

10. Apparatus for characterizing a culture liquid, in particular in a bioreactor, having an illuminating arrangement (24) for illuminating a sample volume (16) of the culture liquid, a microscope objective (18) for imaging cells (22) inside the sample volume (16), and an image-evaluating device (20) for analysing the image, **characterized in that** the illuminating arrangement (24) is provided for dark-field illumination, and the image-evaluating device (20) is designed for comparing the intensities of the light output by the interior of the cell and the edge of the cell, and for distinguishing living and dead cells on the basis of this comparison.

11. Apparatus according to Claim 10, **characterized in that** the illuminating arrangement (26), the microscope objective (18) and the image-evaluating device (20) are arranged inside a tube (10) whose wall is provided with openings for the culture liquid to flow through the sample volume (16).

12. Apparatus according to Claim 11, **characterized in that** the thickness of the sample volume (16) is limited by two glass plates (12, 14) at right angles to the optical axis of the microscope objective (18), of which at least one plate can be shifted along the optical axis.

13. Apparatus according to Claim 11 or 12, **characterized in that** the tube (10) is provided with devices for closing the openings in order to immobilize the sample volume (16).

14. Apparatus according to one of Claims 10 to 13, **characterized in that** the illuminating arrangement (24) is provided for pulsed operation.

15. Apparatus according to one of Claims 10 to 14, **characterized in that** the illuminating arrangement (24) is also designed for bright-field illumination.

16. Apparatus according to one of Claims 10 to 15, **characterized by** a fluorescent light source (42) for fluorescent excitation of the culture liquid, the image-evaluating device (20) being provided for analysing the fluorescent light output by the cells (22).

17. Apparatus according to one of Claims 10 to 16, **characterized by** a first Wollaston prism (58), arranged in the beam path of the illuminating arrangement (24), and a second Wollaston prism (60), arranged in the imaging beam path, for interference contrast observation of the cells (22).

18. Apparatus according to one of Claims 10 to 17, **characterized by** an annular diaphragm (52) arranged in the beam path of the illuminating arrangement (24), and a phase plate (60), arranged in the imaging beam path, for phase contrast observation of the cells (22).

19. Apparatus according to one of Claims 10 to 18, **characterized in that** polarization devices (24) are arranged in the beam path of the illuminating arrangement (24) and/or of the fluorescent light source (42), and polarization-selective devices (44) are arranged in the imaging beam path.

20. Apparatus according to one of Claims 10 to 19, **characterized in that** monochromatizing devices (24, 50) are provided in the beam path of the light emanating from the illuminating arrangement (24) and/or the fluorescent light source (42), or the light sources (26, 46) are themselves monochromatic, and **in that** wavelength-selective devices (44) are arranged in the imaging beam path.

21. Apparatus according to Claim 19 or 20, **characterized in that** provided as polarization- or wavelength-selective device is a beam splitter (44) that passes light of a first polarization or wavelength for the purpose of imaging on a first image recorder (20), and reflects light of a second polarization or wavelength on a second image recorder (42).

## Revendications

1. Procédé de caractérisation d'une liquide de culture, en particulier dans un bioréacteur, dans lequel une analyse est faite in situ par éclairage des cellules (22) contenues dans le liquide de culture, formation d'image au microscope des cellules (22) et par une exploitation de l'image du liquide de culture, **caractérisé par le fait que** l'éclairage est effectué à fond noir et que l'exploitation de l'image comprend une comparaison des intensités de la lumière émise par l'intérieur des cellules et de la lumière émise par le bord des cellules, comparaison par laquelle est effectuée une différenciation des cellules vivantes et des cellules mortes (22) pour la détermination de la vitalité du liquide de culture.

2. Procédé selon la revendication 1, **caractérisé par le fait qu'**en plus de l'éclairage à fond noir est effectué un éclairage à fond clair.

3. Procédé selon l'une des revendications 1 et 2, **caractérisé par le fait qu'**en outre est effectué un éclairage pour l'excitation de fluorescence et l'exploitation de l'image comprend une observation de la lumière fluorescente émise par les cellules (22).

4. Procédé selon l'une des revendications 1 à 3, **caractérisé par le fait qu'**en outre est effectuée une observation en contraste d'interférence des cellules (22).

5. Procédé selon l'une des revendications 1 à 4, **caractérisé par le fait qu'**en outre est effectuée une observation en contraste de phase des cellules (22).

6. Procédé selon l'une des revendications 2 à 5, **caractérisé par le fait que** pour différents modes d'éclairage est utilisée de la lumière différemment polarisée et les images produites par les différents modes d'éclairage sont différenciées à l'aide des polarisations différentes de la lumière qui produit les images.

7. Procédé selon l'une des revendications 2 à 6, **caractérisé par le fait que** pour différents modes d'éclairage est utilisée de la lumière de longueurs d'onde différentes et les images produites par les différents modes d'éclairage sont différenciées à l'aide des longueurs d'onde différentes de la lumière qui produit les images.

8. Procédé selon l'une des revendications 1 à 7, **caractérisé par le fait que** l'éclairage est effectué avec de la lumière pulsée.

9. Procédé selon l'une des revendications 1 à 8, **caractérisé par le fait que** pendant la formation de l'image, pour l'exploitation de l'image, un volume échantillon (16) dont il s'agit de former l'image du liquide de culture est par moments immobilisé.

10. Appareillage pour la caractérisation d'un liquide de culture, en particulier dans un bioréacteur, comportant un dispositif d'éclairage (35) pour l'éclairage d'un volume échantillon (16) du liquide de culture, un objectif de microscope (18) pour la formation d'image de cellules (22) à l'intérieur du volume échantillon (16) et un dispositif d'exploitation d'image (20) pour l'analyse de l'image, **caractérisé par le fait que** le dispositif d'éclairage (24) est prévu pour l'éclairage à fond noir et le dispositif d'exploitation d'image (20) est conçu pour la comparaison des intensités de la lumière émise par l'intérieur des cellules et de la lumière émise par le bord des cellules et pour la différenciation des cellules vivantes et des cellules mortes sur la base de cette comparaison.

11. Appareillage selon la revendication 10, **caractérisé par le fait que** le dispositif d'éclairage (26), l'objectif de microscope (18) et le dispositif d'exploitation d'image (20) sont placés à l'intérieur d'un tube (10) dont la paroi est pourvue d'ouvertures pour le passage du liquide de culture à travers le volume échantillon (16).

12. Dispositif selon la revendication 11, **caractérisé par le fait que** l'épaisseur du volume échantillon (16) est limitée par deux plaques de verre (12, 14) perpendiculaires à l'axe optique de l'objectif de microscope (18) dont au moins une est déplaçable le long de l'axe optique.

13. Appareillage selon l'une des revendications 11 et 12, **caractérisé par le fait que** le tube (10) est, pour l'immobilisation du volume échantillon (16), pourvu de moyens d'obturation des ouvertures.

14. Appareillage selon l'une des revendications 10 à 13, **caractérisé par le fait que** le dispositif d'éclairage (24) est prévu pour un fonctionnement pulsé.

15. Appareillage selon l'une des revendications 10 à 14, **caractérisé par le fait que** le dispositif d'éclairage (24) est en outre conçu pour l'éclairage à fond clair.

16. Appareillage selon l'une des revendications 10 à 15, **caractérisé par** une source de lumière fluorescente (42) pour l'excitation de fluorescence du liquide de culture, le dispositif d'exploitation d'image (20) étant prévu pour l'analyse de la lumière fluorescente émise par les cellules (22).

17. Appareillage selon l'une des revendications 10 à 16, **caractérisé par** un premier prisme de Wollaston (58) placé sur le, trajet des rayons du dispositif d'éclairage (24) et un deuxième prisme de Wollaston (60) placé sur le trajet des rayons de formation d'image pour l'observation en contraste d'interférence des cellules (22).

18. Appareillage selon l'une des revendications 10 à 17, **caractérisé par** un diaphragme annulaire (52) placé sur 1e trajet des rayons du dispositif d'éclairage (24) et une plaque de phase (60) placée sur le trajet des rayons de formation d'image pour l'observation en contraste de phase des cellules (22).

19. Appareillage selon l'une des revendications 10 à 18, **caractérisé par le fait que** sur le trajet des rayons du dispositif d'éclairage (24) et/ou de la source de lumière fluorescente (42) sont placés des dispositifs de polarisation (24) et sur le trajet des rayons de formation d'image sont placés des dispositifs sélectifs de polarisation (44).

20. Appareillage selon l'une des revendications 10 à 19, **caractérisé par le fait que** sur le trajet des rayons de la lumière émise par le dispositif d'éclairage (24) et/ou par la source de lumière fluorescente (42) sont prévus des dispositifs monochromateurs (24, 50), ou les sources lumineuses (26, 48) elles-mêmes sont monochromatiques, et que sur le trajet des rayons de formation d'image sont placés des dispositifs sélectifs de longueur d'onde (44).

21. Appareillage selon l'une des revendications 19 et 20, **caractérisé par le fait que** comme dispositif sélectif de polarisation ou de longueur d'onde est prévu un diviseur optique (44) qui laisse passer la lumière d'un première polarisation ou longueur d'onde pour la formation d'image sur un premier récepteur d'image (20) et réfléchit la lumière d'un deuxième polarisation ou longueur d'onde sur un deuxième récepteur d'image (42).
